# EUROPEAN PATENT APPLICATION

(11) **EP 2 351 968 A2**
(43) Date of publication of application: **03.08.2011**
(21) Application number: 10193506.2
(22) Date of filing: 02.12.2010
(51) Int. Cl.: F24D 11/00

(54) **Heat recovery apparatus**

(30) Priority: 07.01.2010 GB 1000189
(71) Applicant: Zenex Technologies Limited, Exeter Devon EX1 1NT (GB)
(72) Inventor: Farrell, Christopher, Exeter, Devon EX32 2DE (GB)
(74) Representative: Beck, Simon Antony

(57) **Abstract**

A heat recovery apparatus comprising a vessel having: a first liquid flow path such that a first liquid can pass through the vessel between a first liquid inlet and a first liquid outlet; a second liquid flow path in thermal contact with the first liquid flow path; and a heater for occasionally heating at least the liquid in the second liquid flow path on an occasional basis. This allows Legionella growth to be inhibited.

## Description

The present invention relates to a heat recovery apparatus, and in particular to an apparatus suitable for recovering heat from "grey" water.

### BACKGROUND OF THE INVENTION

Water after it has been used for washing or showing is often discharged directly to the waste water, i.e. sewerage, systems. However such water which is typically termed "grey" water may contain significant amounts of heat. For example most bathers get out of a bath while it is still relatively warm. Furthermore it is estimated that around 70 to 80% of the heat delivered into a shower leaves via the shower drain. Thus there is significant potential to collect heat from such grey water.

### SUMMARY OF THE INVENTION

According to a first aspect of the present invention there is provided a heat recovery apparatus comprising a vessel having: a first liquid flow path such that a first liquid can pass through the vessel between a first liquid inlet and a first liquid outlet; a second liquid flow path in thermal contact with the first liquid flow path; and a heater within the vessel for occasionally heating at least the liquid in the second liquid flow path.

It is thus possible to provide a heat recovery apparatus which can recover heat from grey water and deliver it to a further liquid such as a cold water supply. The cold water supply may be used as a cold water input to a boiler, thereby reducing the amount of work that needs to be done by the boiler and hence the amount of fuel it consumes. Alternatively the water supply may go to items such as washing machines and dishwashers thereby reducing their heating requirements.

However, having static volumes of previously warmed water can cause a health risk due to Legionella. It is therefore beneficial to provide a heater to occasionally heat at least the liquid in the second liquid flow path such that any Legionella in it is deactivated. The heater may, for example, be in the form of an electrical resistance heater embedded within or formed in or on the second liquid flow path. However, it is generally more convenient to have the heater heat a volume of water that is in contact with the second liquid flow path, thereby ensuring that that volume of water does not propose a Legionella risk either.

As an alternative to electrical heating, or in addition to electrical heating, a further pipe may be provided such that it can receive warmed water from, for example, a primary circuit of a boiler such that water within the heat recovery apparatus can be heated to at least 50°C, and preferably 60°C by the boiler.

The vessel may be configured such that it permanently retains a volume of the grey water. Consequently the grey water can also act as a thermal store thereby allowing more energy to be transferred to cold water passing through the second liquid flow path. As a variation, a dedicated thermal store, for example in the form of a tank of water surrounding the second liquid flow path may be provided, and the thermal store is itself in heat exchange contact with the grey water. Where a tank of water is provided as the thermal store the tank may be closed. This represents no explosion threat as the grey water passing through the heat recovery device will, by definition, be below the boiling point of water. Alternatively the tank may be open such that it vents to atmospheric pressure, or the pressure pertaining within the vessel of the heat recovery apparatus. When the tank is open it may be allowed to refill by being exposed to the grey water passing through the heat recovery apparatus. This is a particularly safe arrangement as both the tank of water forming the thermal store and the grey water are open vented, such that even if a fault developed in the heater such that it tried to overheat the water in the heat recovery apparatus, the water can boil away with no build up of pressure.

Advantageously a temperature operated valve, where the valve is either mechanically or electrically controlled, may be provided in order to inhibit the grey water from being in substantial thermal exchange with the second liquid flow path or the tank surrounding the second liquid flow path whilst the grey water is below a first threshold temperature. The first threshold temperature may be an absolute temperature, for example 25°C, or it may be determined relative to the temperature of the water in the tank or in the second liquid flow path. This provides a mechanism for preventing the passage of cold grey water through the heat recovery apparatus from depleting the heat store of heat that it had previously recovered and stored.

In an embodiment of the invention the boiler may be operated so as to deliberately heat the thermal store and/or grey water to store energy in it such that the energy can be recovered at a later date.

Thus a pipe passing through the heat recovery apparatus may be selectively heated by the boiler, or may be selectively placed in a circulation path of water in a space heating circuit such that at, for example heating shutdown, heat from the space heating circuit can be recovered and stored in the heat recovery apparatus. At a later event, such as at heating start up, water in the space heating circuit can flow through the pipe again to recover some heat, for re-use in the space heating circuit. The pipe can be the same pipe as provided for the occasional heating of the store or could be a further pipe. Such an arrangement is disclosed in GB 2461077.

### BRIEF DESCRIPTION OF THE FIGURES

The present invention will further be described, by way of non-limiting example only, with reference to the accompanying Figures, in which:
Figure 1 is a cross sectional diagram of a heat recovery apparatus constituting a further embodiment of the present invention;
Figure 2 is a cross sectional schematic diagram of a heat recovery apparatus constituting a second embodiment of the present invention;
Figure 3 is a cross sectional schematic diagram of a heat recovery apparatus constituting a further embodiment of the present invention; and
Figure 4 is a schematic diagram showing the connection of a heat recovery apparatus constituting an embodiment of the present invention between a cold water main and an appliance.

### DESCRIPTION OF PREFERRED EMBODIMENTS OF THE INVENTION

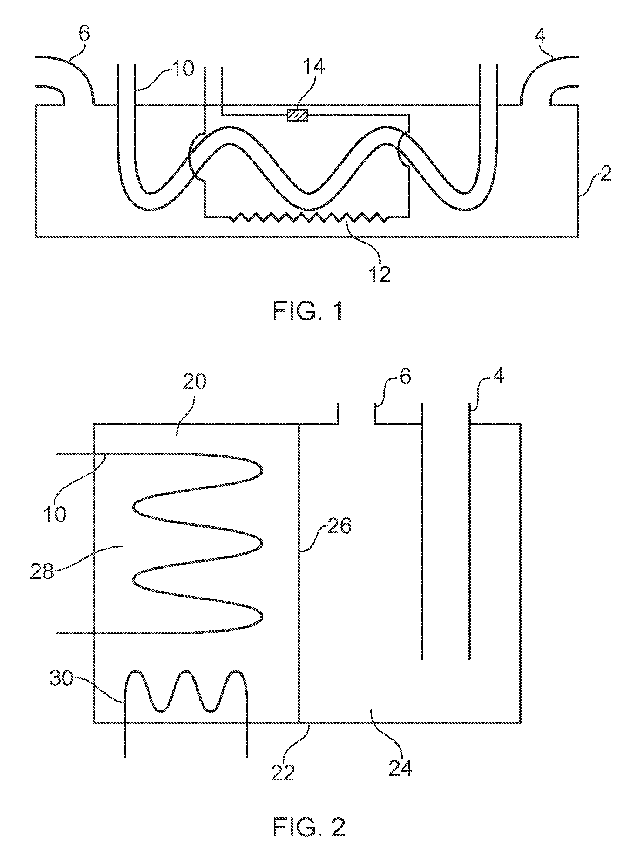

Figure 1 schematically illustrates a first embodiment of the present invention which comprises a vessel, generally designated 2, having an inlet 4 arranged to receive grey water from a bath or shower and an outlet 6 arranged to deliver grey water to a drain. The shape of the vessel is not particularly important, but it may advantageously be relatively long compared to its height or width such that it could be installed in the space beneath the bath, between floor joists, or under a kitchen cupboard. The vessel may be made of any suitable material, including metals or plastics. In use, the vessel fills with grey water such that this embodiment always contains a volume of grey water from the bath or shower. Thus the inlet pipe 4, the void in the interior of the vessel 2 and the outlet pipe 6 form a first liquid flow path.

In order to extract heat from the grey water a second liquid flow path for, for example, mains water, is provided by a pipe 10 which passes through the majority of the vessel 2. In order to improve the heat transfer characteristics the pipe may be provided with fins, but more easily is simply formed into a meandering path or a spiral or coil. The pipe 10 can be placed in series connection between a water main and a boiler or some other domestic appliance such as a washing machine or a dishwasher.

Because users, be they domestic or industrial, may not draw water for extended periods of time then there becomes a risk that Legionella, which occurs naturally, may multiply within the warmed region of the pipe 10 to such a level that they become a risk to health then means need to be provided in order to prevent this. It is known that Legionella can be controlled by heating to above 50°C, and preferably to above 60°C, so as to kill the bacteria. In order to achieve this heating means, in this example in the form of an electrically powered heater 12 is disposed within the heat recovery apparatus such that it can be energised to heat the water in the pipe 10, and advantageously also the grey water within the vessel 2 thereby preventing risk of disease. The heater 12 may be energised periodically by a time clock or a controller and may include an inline thermostat 14 to interrupt the power supply to the heater 12 once the temperature of the water in vessel 2 exceeds a predetermined upper limit, for example 65°, in order to prevent excessive waste of energy or risk of boiling.

Figure 2 shows a variation on the theme in Figure 1 where a heat storage reservoir 20, in this instance in the form of a closed vessel 20 filled with a suitable liquid, such as water, is provided within a vessel 22 and the first liquid flow path from the inlet 4 to the outlet 6 is via a chamber 24. An intermediate wall 26, which for example is formed of metal, provides a heat exchange boundary between grey water in the chamber 24 and a heat storage medium 28 in the reservoir or closed vessel 20. A cold water main 10 meanders through the reservoir 20 so as to pick up heat therefrom and a further pipe 30 allows heat from the warmed fluid within the pipe 30 to heat the water 28 in the reservoir 20 to above 50 or 60°C, and in so doing also warms the water within the pipe 10 to that temperature. The pipe 30 may, for example, be part of a dedicated warming circuit or may be driven from the primary circuit of a boiler.

It can also be seen that heat exchange can occur across the wall 26 such that the grey water in the chamber 24 also gets heated. When the heating is provided by the pipe 30 being filled with warmed liquid then there is no need to provide a thermostat within the reservoir 20 as the overheat control systems of the boiler 30 control the temperature of the liquid in the pipe 30 in order to prevent boiling from occurring.

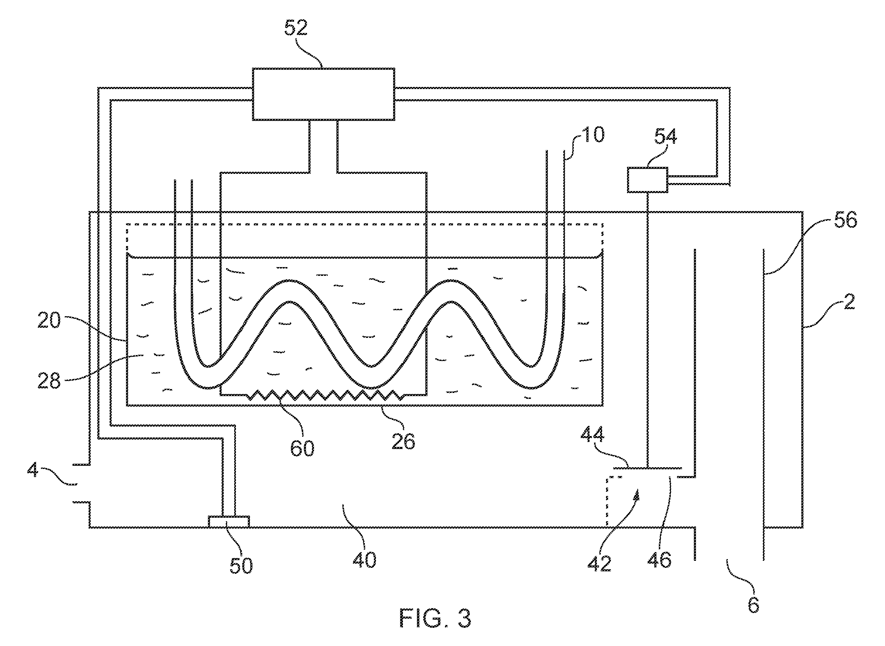

Figure 3 shows a further variation which in many ways is similar to Figure 2 as a reservoir 20 containing water 28 is provided and the secondary liquid flow path 10 meanders through the reservoir 20 so as to pick heat up from the water 28. However, as noted with respect to Figure 2 in that arrangement it is possible for heat exchange to occur from the reservoir 20 to the grey water 24. The arrangement in Figure 3 alleviates this problem because the inlet 4 and the outlet 6 are formed towards the bottom of the vessel 2 and, in addition, a restricted flow orifice, or several orifices are formed near the outlet 6 such that in the absence of water inflow above a predetermined rate the grey water region 40 of the vessel 2 tends to drain. Furthermore, a thermostatically controlled valve 42, for example in the form of a movable closure 44 co-operating with an orifice 46 may be provided such that if the water passing through the region 40 is too cold then it is ducted directly towards the outlet 6 and is not allowed to collect in the region 40. This in turn prevents cold grey water from coming in contact with a heat exchange wall 26 of the reservoir 20. The temperature of the water could be determined by a mechanically operated temperature sensing valve, or as shown in Figure 3 may be determined by an electronic temperature sensing element 50 which is connected to a controller 52 which in turn controls an electric actuator 54, such as a stepper motor or a solenoid which is mechanically connected to the valve 42 so as to open and close it.

Once the temperature detector 50 detects that the grey water is sufficiently warm then the controller 52 actuates the actuator 54 so as to close the valve 42 thereby forcing the warm grey water to collect within the vessel 2 until such time as its level is sufficiently high to reach the top of an overflow pipe 56 which is in connection with the drain 6. This arrangement ensures that any failure of the controller 52 the temperature sensor 50 or the actuator 54 will not prevent the passage of grey water towards a drain.

This arrangement not only has the advantage that cold water does not come in contact with the reservoir 20, thereby depleting heat from it unnecessarily, but it also means that only the volume of water 28 in the reservoir 20 and in the section of the pipe 10 that passes through the reservoir 20 needs to be warmed by the heater in order to kill the Legionella bacteria. Further temperature sensors may be provided in the reservoir 20 in order to determine when it has been heated sufficiently, for example under the control of an electrical heater 60.

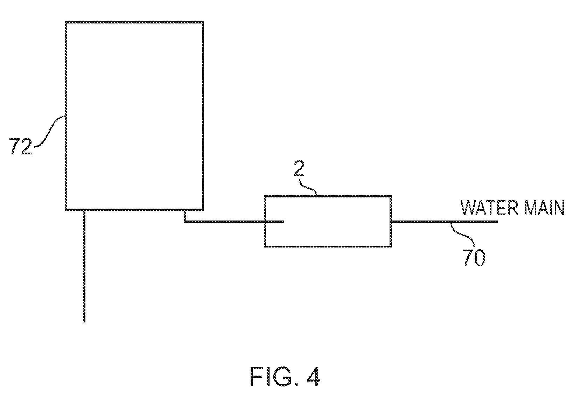

As mentioned before the heat exchange apparatus as shown in Figures 1, 2 or 3 may be placed in serious connection between the water main 70 and an appliance 72 as shown in Figure 4. The appliance 72 might be a washing machine or a dishwasher or alternatively could be a boiler for providing domestic hot water.

It is thus possible to provide a heat recovery system for the recovery of heat from grey water, but also to include means to prevent the build-up or growth of Legionella bacteria.

## Claims

1. A heat recovery apparatus comprising a vessel having:
a first liquid flow path such that a first liquid can pass through the vessel between a first liquid inlet and a first liquid outlet;
a second liquid flow path in thermal contact with the first liquid flow path; and
a heater within the vessel for occasionally heating at least the liquid in the second liquid flow path.

2. A heat recovery apparatus as claimed in claim 1, in which the first liquid is waste water from sinks, baths or showers.

3. A heat recovery apparatus as claimed in claim 1 or 2, in which the second liquid flow path is in series with a cold water main.

4. A heat recovery apparatus as claimed in any of the preceding claims, in which the heater comprises an electric heating element.

5. A heat recovery apparatus as claimed in any of the preceding claims, in which the heater comprises a third liquid flow path arranged to be switched into communication with a boiler such that warmed liquid from the boiler is passed through the liquid flow path.

6. A heat recovery apparatus as claimed in any of the preceding claims, in which the vessel is adapted to retain a predetermined volume of waste water therein.

7. A heat recovery apparatus as claimed in any of claims 1 to 5, in which the vessel has a valve or a flow restriction associated with the first outlet such that in the absence of a flow of liquid into the first inlet the vessel tends to empty.

8. A heat recovery apparatus as claimed in any of the preceding claims, further comprising a heat store within the vessel associated with the second liquid flow path.

9. A heat recovery apparatus as claimed in claim 8, in which the heat store comprises a reservoir of liquid through which the second liquid flow path passes.

10. A heat recovery apparatus as claimed in claim 9, in which the heat store is a closed container.

11. A heat recovery apparatus as claimed in claim 9, in which the heat store is an open container.

12. A heat recovery apparatus as claimed in claim 11, in which the heat store is replenished by the waste water.

13. A heat recovery apparatus as claimed in any of claims 8 to 12, in which the heat store is located above the first liquid flow path.

14. A heat recovery apparatus as claimed in any of the preceding claims in combination with a boiler, wherein the heat recovery apparatus is an inlet path to the boiler.

15. A heat recovery apparatus as claimed in any of the preceding claims in which the heater is operated to heat at least the liquid in the second flow path to at least 50°C.
